# EUROPÄISCHE PATENTSCHRIFT

(11) **EP 3 053 436 B1**
(45) Veröffentlichungstag und Bekanntmachung des Hinweises auf die Patenterteilung: **13.09.2017**
(21) Anmeldenummer: 16401007.6
(22) Anmeldetag: 01.02.2016
(51) Int. Cl.: A01M 7/00

(54) **VERTEILERGESTÄNGE**
SPRAYER BOOM
RAMPE DE DISTRIBUTION

(30) Priorität: 03.02.2015 DE 102015101491
(43) Veröffentlichungstag der Anmeldung: 10.08.2016
(73) Patentinhaber: Amazonen-Werke H. Dreyer GmbH & Co. KG, 49205 Hasbergen (DE)
(72) Erfinder: Oberheide, Friedrich, 49143 Bissendorf (DE); Kowallik, Daniel, 47443 Moers (DE)

(56) Entgegenhaltungen:
- EP-A1- 1 230 852
- EP-A1- 1 522 218
- FR-A1- 2 673 355
- US-A1- 2015 098 753

## Beschreibung

Die Erfindung betrifft ein Verteilergestänge gemäß des Oberbegriffes des Patentanspruches 1.

Ein derartiges Verteilergestänge ist in FR 2 673 355 A1 beschrieben. Dieses Verteilergestänge für eine landwirtschaftliche Verteilmaschine besteht aus mehreren zueinander in Transportstellung einklappbaren und in Arbeitsstellung aus klappbaren Gestängeabschnitten. Das Verteilergestänge erstreckt sich quer zur Fahrtrichtung und kann Arbeitsbreiten von bis zu 24 m und mehr aufweisen. Der jeweils äußere Endabschnitt ist mittels Ausweichgelenken und um aufrechte Achsen gegen eine nachgebende Federkraft erzeugende Federeinrichtung in auf die Fahrtrichtung bezogene Vorwärts- und/oder Rückwärtsrichtung beim Auftreffen auf Hindernissen ausweichbar angeordnet. Die Ausweichgelenke weisen zwei übereinander liegende Gelenkanordnungen auf. Die eine Gelenkanordnung ist als Kugelgelenk ausgebildet, während die andere Gelenkanordnung jeweils zwei in Fahrtrichtung zueinander beabstandete und auseinander bewegbare komplementäre Gelenkelemente aufweist. Diese Anordnung hat sich hinsichtlich der Ausweichbarkeit in der Praxis durchaus bewährt. Nachteilig ist jedoch, dass bei extremen Ausweichbewegungen und bei einem unebenen Gelände, wenn das Gestänge in Schwingungen geraten kann, die Gelenkanordnung mit den zwei in Fahrtrichtung zueinander beabstandeten und auseinander bewegbaren komplementären Gelenkelemente diese Gelenkelemente bei dem Zurückgehen in die Ausgangsstellung nicht immer wieder in die vorgesehenen komplementären Gelenkelemente zusammen kommen, sondern auseinander springen und/oder fallen.

Der Erfindung liegt die Aufgabe zu Grunde, eine sicher funktionierende Gelenkanordnung für die Ausweichgelenke zu schaffen.

Diese Aufgabe der erfindungsgemäß dadurch gelöst, dass das eine der komplementären Gelenkelemente als geschlossenes ringförmiges Element ausgebildet ist, dass innerhalb dieses geschlossenen ringförmigen Elementes die beabstandet zueinander angeordneten Gelenkelemente des komplementären Gelenkelementes versetz- und/oder bewegbar angeordnet sind.

In Folge dieser Maßnahmen wird sichergestellt, dass die Gelenkanordnung nicht auseinander springen und/oder fallen kann, sondern der Endabschnitt immer wieder in seine Ausgangsposition zurückkehrt. Somit wird ein kontrolliertes Ausweichen und Verschwenken des Endabschnittes über die Gelenkanordnung gewährleistet. Auch bei extremen Ausweichung und unter schwierigen Verhältnissen können sich die komplementären Gelenkelemente immer wieder zueinander ausrichten und fangen.

Damit der Endabschnitt immer sicher an dem benachbarten Abschnitt des Verteilergestänges gehalten wird und nach Ausweichbewegungen sicher in die vorgesehene Position zurückkehrt, ist vorgesehen, dass die jeweilige Federkraft erzeugende Federeinrichtung zwischen dem jeweiligen Endabschnitt und dem jeweiligen benachbarten innen liegenden Gestängeabschnitt angeordnet ist und die jeweiligen Endabschnitte ausweichbar gegenüber den innen liegenden Gestängeabschnitten hält, dass die Federeinrichtung die beabstandeten komplementären Gelenkelemente der zweiten Gelenkanordnung in Anlage aneinander anliegend zueinander hält.

Eine vorteilhafte Ausgestaltung des ringförmigen Elementes der Gelenkanordnung wird dadurch erreicht, dass die Innenkontur des ringförmigen Elementes herzförmig ausgebildet ist.

Eine besonders vorteilhafte Ausgestaltung der einen Gelenkanordnung, die ein kontrolliertes Ausweichen und Zurückkehren des Endabschnittes in seine Ausgangsposition gewährleistet, wird dadurch erreicht, dass die Innenkontur des ringförmigen Elementes ausgehend von den beabstandeten Anlagebereichen der beabstandet zueinander angeordneten Gelenkelemente in Nichtausweichposition zwei zueinander beabstandete Führungsbahnen, deren Abstand zueinander sich zumindest nicht verringert, aufweist.

Eine vorteilhafte Zuordnung der Gelenkanordnung ergibt sich dadurch, dass die erste Gelenkanordnung sich unterhalb der zweiten Gelenkanordnung befindet. Hierbei ist in bevorzugter Weise vorgesehen, dass die das Kugelgelenk aufweisende Gelenkanordnung als untere der Gelenkanordnungen ausgebildet ist

Eine robuste Ausgestaltung und ein vorteilhaftes Ansteuern der Federeinrichtung lässt sich dadurch erreichen, dass die Federeinrichtung als Hydraulikzylinder mit zugeordnetem Hydraulikspeicher ausgebildet ist.

Eine einfache Ausgestaltung des Ausweichgelenkes lässt sich dadurch verwirklichen, dass die zweite Gelenkanordnung nach dem Prinzip Gelenkbolzen und Gelenkhülse ausgebildet ist. Hierbei kann der Gelenkbolzen in der vergrößert und erfindungsgemäß ausgestalteten Gelenkhülse sich bei dem Ausweichen entsprechend bewegen. Die Gelenkhülse bildet das ringförmiges Element der Gelenkanordnung.

Weitere Einzelheiten der Erfindung sind der Beispielsbeschreibung und den Zeichnungen zu entnehmen. Die Zeichnungen zeigen
- Fig.1: das Verteilergestänge einer als Pflanzenschutzspritze ausgebildeten landwirtschaftlichen Verteilmaschine in der Ansicht von hinten und in Prinzipdarstellung,
- Fig.2: das in Fahrtrichtung gesehen rechte Ausweichgelenk zwischen dem Endabschnitt und dem benachbarten innen liegenden Gestängeabschnitt in Arbeitsposition,
- Fig.3: das Ausweichgelenk gemäß Fig.2 in perspektivischer Darstellung,
- Fig.4: das Ausweichgelenk gemäß Fig.2 in Draufsicht,
- Fig.5: das Ausweichgelenk gemäß Fig.2 in perspektivischer Darstellung, jedoch in Ausweichstellung nach vorn, wenn sich im Bereich des Endabschnittes beim Rückwärtsfahren ein Hindernis befindet,
- Fig.6: das Ausweichgelenk gemäß Fig.5 in Draufsicht,
- Fig.7: das Ausweichgelenk gemäß Fig.2 in perspektivischer Darstellung, jedoch in Ausweichstellung nach oben, wenn der äußere Bereich des Endabschnittes Bodenberührung bekommt,
- Fig.8: das Ausweichgelenk gemäß Fig.7 in der Ansicht von hinten und
- Fig.9: das Ausweichgelenk gemäß Fig.7 in der Draufsicht und
- Fig.10: das geschlossene ringförmige Element des komplementären Gelenkelementes in perspektivischer Darstellung.

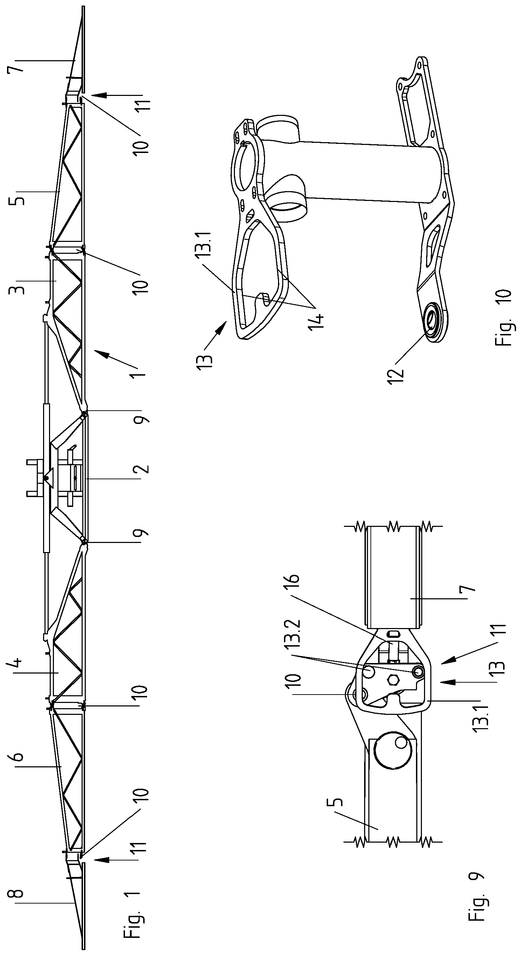

Das Verteilergestänge 1 einer als Pflanzenschutzspritze ausgebildeten landwirtschaftlichen Verteilmaschinen weist die mehreren zueinander in Transportstellung einklappbaren und in Arbeitsstellung, wie in Fig.1 dargestellt ist, und ausklappbaren Gestängeabschnitte 2, 3, 4, 5, 6, 7, 8 auf. Die Gestängeabschnitten 2, 3, 4, 5, 6, 7, 8 sind mittels Gelenken 9, 10 jeweils miteinander verbunden. Auf jeder Seite des Verteilergestänges 1 ist ein Endabschnitt 7, 8 angeordnet, welches jeweils zusätzlich mittels eines Ausweichgelenkes 11 am inneren benachbarten Gestängeabschnitt 5, 6 des Verteilergestänges 1, bezogen auf die Fahrtrichtung in Vorwärts- und/oder Rückwärtsrichtung beim Auftreffen auf Hindernissen ausweichbar angeordnet ist.

Jedes Ausweichgelenk 11 weist zwei übereinander liegende Gelenkanordnungen 12, 13 auf. Im Ausführungsbeispiel ist die die untere Gelenkanordnung 12 als Kugelgelenk ausgebildet, während die obere Gelenkanordnung 13 jeweils zwei in Fahrtrichtung 15 zueinander beabstandete und auseinander bewegbare komplementäre Gelenkelemente 13.1, 13.2 aufweist. Zwischen dem jeweiligen Endabschnitt 7, 8 und dem jeweils benachbarten inneren Gelenksabschnitt 5, 6 ist ein als Hydraulikzylinder 16 ausgebildetes eine nachgebende Federkraft erzeugende Federeinrichtung angeordnet. Durch diese Federeinrichtung werden der Endabschnitt 7, 8 und der jeweils benachbarte innere Gestängeabschnitt 5, 6 im Bereich der Gelenkanordnung 13 federnd zusammengezogen und zueinander gehalten. In vorteilhafterweise ist dem Hydraulikzylinder 16 ein nicht dargestellter Hydraulikspeicher zugeordnet, über den durch den Hydraulikzylinder 16 ausgeübte und auf die Gestängeabschnitten 5, 6, 7, 8, einwirkende Federkraft erzeugt wird.

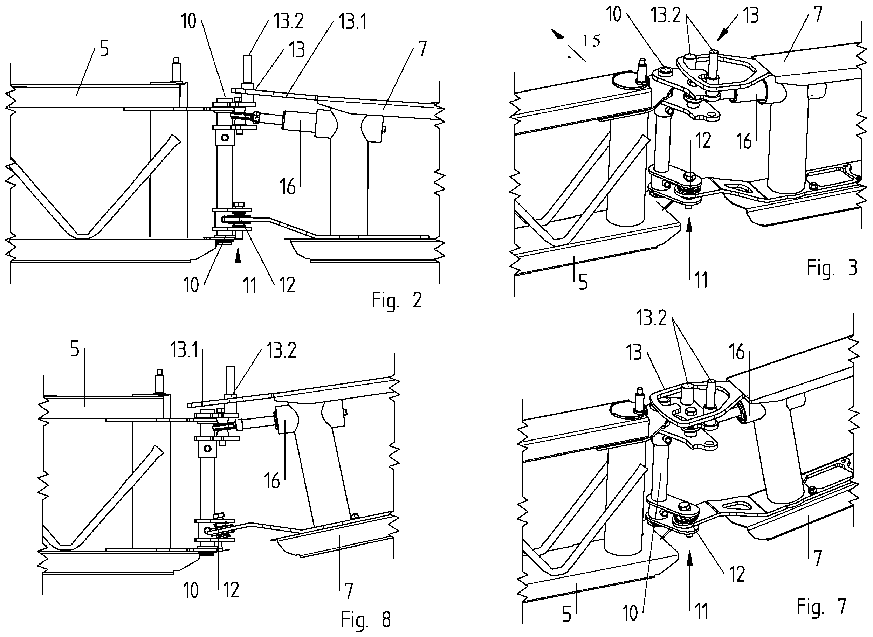

Das eine der komplementären Gelenkelemente 13 ist als geschlossenes ringförmiges Element 13.1 ausgebildet. Innerhalb dieses geschlossenen ringförmigen Elementes 13.1 sind zwei beabstandet zueinander angeordnete bolzen- und/oder stiftförmige Gelenkelemente 13.2 des komplementären Gelenkelementes 13 versetz- und/oder bewegbar angeordnet. Die die jeweilige Federkraft erzeugende Federeinrichtung, die von dem Hydraulikzylinder 16 gebildet wird, ist zwischen dem jeweiligen Endabschnitt 7, 8 und dem jeweiligen benachbarten innen liegenden Gestängeabschnitt 5, 6 angeordnet. Mittels dieser Federeinrichtung 16 werden die jeweiligen Endabschnitte 7, 8 ausweichbar gegenüber den innen liegenden Endabschnitten 5, 6 gehalten. Durch die von dem Hydraulikzylinder 16 gebildete Federeinrichtung werden die beabstandeten komplementären Gelenkelemente 13, 13.1, 13.2 in Anlage aneinander anliegend gehalten, wie die Fig.2-4 zeigen. Die Innenkontur des ringförmigen Elementes 13.1 ist herzförmig ausgebildet.

Durch die geschlossene ringförmige Ausgestaltung dieses Gelenkelementes 13.1 wird sichergestellt, dass die zugeordneten Gelenkelemente 13.2, die von bolzen- und/oder stiftförmigen Gelenkelementen gebildet werden, nicht aus dem ringförmig ausgebildeten Gelenkelemente 13.1 herausspringen können. Somit ist eine sichere zueinander Ordnung der komplementär ausgestalteten Gelenkelemente 13.1 und 13.2 der entsprechenden Gelenkanordnung 13 immer gewährleistet.

Die Innenkontur des ringförmigen Elementes 13.1 mit den zwei zueinander beabstandeten Führungsbahnen 14 verringert sich ausgehend von den beabstandeten Anlagebereichen der beabstandet zueinander angeordneten Gelenkelemente 13.2 in Nichtausweichposition nicht. Somit wird der Abstand in diesem Bereich der Führungsbahnen 14 ausgehend von den vorerwähnten Anlagebereichen nicht geringer. Diese Gelenkanordnung 13 ist nach dem Prinzip Gelenkbolzen 13.2 und Gelenkhülse 13.1, wobei die Gelenkhülse 13.1 entsprechend größer gegenüber dem Gelenkbolzen 13.2 ausgestattet ist, ausgebildet.

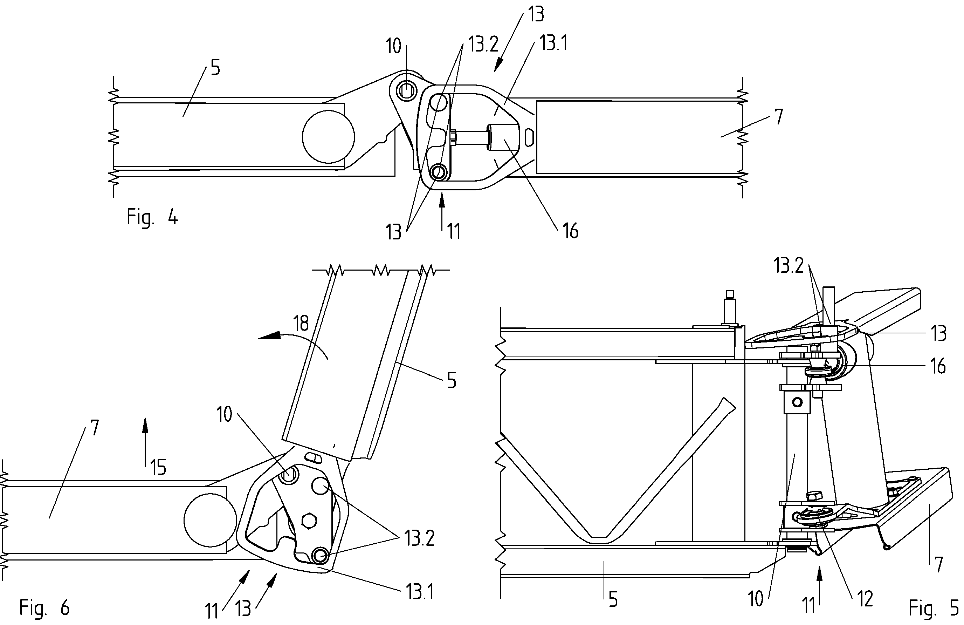

Die Funktionsweise der vorbeschriebenen erfindungsgemäßen Gelenkanordnung 11, 13 zwischen dem jeweiligen Endabschnitt 7, 8 und dem inneren benachbarten Gestängeabschnitt 5, ist Folgende:
Wenn sich, wie im Ausführungsbeispiel gemäß den Fig. 5 und 6 dargestellt, beim Rückwärtsfahren ein Hindernis im Bereich des Endabschnittes 7 des Verteilergestänges 1 befindet, wird dieses nach vorn in Pfeilrichtung 18 gedrückt, so dass es in Vorwärtsrichtung, also entgegen der Rückwärtsfahrtrichtung und in Vorwärtsfahrtrichtung 15, ausweicht. Hierbei verschwenkt der Endabschnitt 7 um die Gelenkachse des Kugelgelenk 12 und den hinteren Gelenkbolzen 13.2, wie die Fig.5 und 6 zeigen. Bei dieser Ausweichbewegungen werden der hintere Gelenkbolzen 13.2 und die hintere Ecke des ringförmigen Gelenkelementes 13.1 durch den Hydraulikzylinder 16 gegeneinander gedrückt. Nach dem Passieren des Hindernisses schwenkt der Endabschnitt 7 wieder in die in den Fig.2-4 dargestellte Position zurück, in welcher die beiden Gelenkbolzen 13.2 an den entsprechenden Stellen des ringförmigen Gelenkelementes 13.1 anliegen.
Gleiches geschieht in umgekehrter Weise, wenn bei Vorwärtsfahrt der Endabschnitt 7 des Verteilergestänges 1 nach hinten ausweicht, wenn sich im Bereich des Endabschnittes 7 ein Hindernis befindet. Wenn der äußere Endabschnitt 7 den Boden berührt, wird er nach oben gedrückt, wie die Fig.7-9 zeigen. Hierbei wird der Endabschnitt angehoben und schwenkt um die Gelenkachse des Kugelgelenk 12 nach oben, so dass die Gelenkbolzen 13.2 von den äußeren Enden des ringförmigen Elementes 13.1 der Gelenkanordnung 13 abheben und in den freien Raum des Inneren des Gelenkelementes 13.1 in Richtung nach außen sich verschieben, wie die Fig. 7-9 zeigen.

## Patentansprüche

1. Verteilergestänge (1) für eine landwirtschaftliche Verteilmaschine mit mehreren zueinander in Transportstellung einklappbaren und in Arbeitsstellung ausklappbaren Gestängeabschnitten (2, 3, 4, 5, 6, 7, 8) und mit auf jeder Seite des Verteilergestänges (1) mittels Ausweichgelenken (11) und um aufrechte Achsen gegen eine nachgebende Federkraft erzeugende Federeinrichtung (16) in auf die Fahrtrichtung (15) bezogene Vorwärts- und/oder Rückwärtsrichtung beim Auftreffen auf Hindernissen ausweichbar angeordneten Endabschnitten (7, 8), wobei die Ausweichgelenke (11) zwei übereinander liegende Gelenkanordnungen (12, 13) aufweisen, wobei die erste Gelenkanordnung als Kugelgelenk (12) ausgebildet ist und die zweite Gelenkanordnung (13) jeweils zwei in Fahrtrichtung (14) zueinander beabstandete und auseinander bewegbare komplementäre Gelenkelemente (13.1, 13.2) aufweist, **dadurch gekennzeichnet, dass** das eine der komplementären Gelenkelemente (13) als geschlossenes ringförmiges Element (13.1) ausgebildet ist, dass innerhalb dieses geschlossenen ringförmigen Elementes (13.1) die beabstandet zueinander angeordneten Gelenkelemente (13.2) des komplementären Gelenkelementes (13) versetz- und/oder bewegbar angeordnet sind.

2. Verteilergestänge nach Anspruch 1, **dadurch gekennzeichnet, dass** die jeweilige Federkraft erzeugende Federeinrichtung (16) zwischen dem jeweiligen Endabschnitt und dem jeweiligen benachbarten innen liegenden Gestängeabschnitt (5, 6) angeordnet ist und die jeweiligen Endabschnitte (7, 8) ausweichbar gegenüber den innen liegenden Gestängeabschnitten (5, 6) hält, dass die Federeinrichtung (16) die beabstandeten komplementären Gelenkelemente (13) der zweiten Gelenkanordnung (13, 13.1, 13.2) in Anlage aneinander anliegend zueinander hält.

3. Verteilergestänge nach zumindest einem der vorstehenden Ansprüche, **dadurch gekennzeichnet, dass** die Innenkontur des ringförmigen Elementes (13.1) herzförmig ausgebildet ist.

4. Verteilergestänge nach zumindest einem der vorstehenden Ansprüche, **dadurch gekennzeichnet, dass** die Innenkontur des ringförmigen Elementes (13.1) ausgehend von den beabstandeten Anlagebereichen (14) der beabstandet zueinander angeordneten Gelenkelemente (12, 13) in Nichtausweichposition zwei zueinander beabstandete Führungsbahnen (14), deren Abstand zueinander sich zumindest nicht verringert, aufweist.

5. Verteilergestänge nach zumindest einem der vorstehenden Ansprüche, **dadurch gekennzeichnet, dass** die erste Gelenkanordnung (12) sich unterhalb der zweiten Gelenkanordnung (13) befindet.

6. Verteilergestänge nach zumindest einem der vorstehenden Ansprüche, **dadurch gekennzeichnet, dass** die Federeinrichtung als Hydraulikzylinder (16) mit zugeordnetem Hydraulikspeicher ausgebildet ist.

7. Verteilergestänge nach zumindest einem der vorstehenden Ansprüche, **dadurch gekennzeichnet, dass** die zweite Gelenkanordnung (13) nach dem Prinzip Gelenkbolzen (13.2) und Gelenkhülse (13.1) ausgebildet ist.

## Claims

1. Sprayer boom (1) for an agricultural distributing machine, with a plurality of boom portions (2, 3, 4, 5, 6, 7, 8) which can be folded up with respect to one another into a transport position and unfolded with respect to one another into a working position, and with end portions (7, 8) which are arranged so as to be deflectable about vertical axes counter to a spring device (16), which generates a yielding spring force, in the forwards and/or rearwards direction with respect to the direction of travel (15) upon striking against obstacles, wherein the deflecting joints (11) have two joint arrangements (12, 13) lying one above the other, wherein the first joint arrangement is designed as a ball and socket joint (12) and the second joint arrangement (13) in each case has two complementary joint elements (13.1, 13.2) which are spaced apart with respect to each other in the direction of travel (14) and are movable apart, **characterized in that** one of the complementary joint elements (13) is designed as a closed annular element (13.1), **in that** the joint elements (13.2) of the complementary joint element (13), which joint elements are arranged spaced apart from one another, are arranged shiftably and/or movably within said closed annular element (13.1).

2. Sprayer boom according to Claim 1, **characterized in that** the respective spring device (16) generating spring force is arranged between the respective end portion and the respective adjacent, inner boom portion (5, 6) and holds the respective end portions (7, 8) so as to be deflectable in relation to the inner boom portions (5, 6), **in that** the spring device (16) holds the spaced-apart complementary joint elements (13) of the second joint arrangement (13, 13.1, 13.2) with respect to one another in a manner lying against one another.

3. Sprayer boom according to at least one of the preceding claims, **characterized in that** the inner contour of the annular element (13.1) is of heart-shaped design.

4. Sprayer boom according to at least one of the preceding claims, **characterized in that**, in the non-deflected position, the inner contour of the annular element (13.1) has, starting from the spaced-apart contact regions (14) of the joint elements (12, 13) arranged spaced apart from each other, two mutually spaced-apart guide tracks (14), the distance of which from each other is at least not reduced.

5. Sprayer boom according to at least one of the preceding claims, **characterized in that** the first joint arrangement (12) is located below the second joint arrangement (13).

6. Sprayer boom according to at least one of the preceding claims, **characterized in that** the spring device is designed as a hydraulic cylinder (16) with an associated hydraulic accumulator.

7. Sprayer boom according to at least one of the preceding claims, **characterized in that** the second joint arrangement (13) is designed in accordance with the principle of joint bolt (13.2) and joint sleeve (13.1).

## Revendications

1. Rampe de distribution (1) pour une machine de distribution agricole avec plusieurs parties de rampe (2, 3, 4, 5, 6, 7, 8) rabattables l'une par rapport à l'autre en position de transport et pouvant être déployées en position de travail et avec des parties d'extrémité (7, 8) disposées de façon escamotable sur chaque extrémité de la rampe de distribution (1) au moyen d'articulations de déviation (11) et autour d'axes verticaux contre un agencement de ressort (16) produisant une force de ressort élastique, dans une direction avant et/ou arrière par rapport à la direction de marche (15), lors du heurt contre des obstacles, dans laquelle les articulations de déviation (11) présentent deux agencements d'articulation (12, 13) disposés l'un au-dessus de l'autre, dans laquelle le premier agencement d'articulation est réalisé en forme de rotule (12) et le deuxième agencement d'articulation (13) présente chaque fois deux éléments d'articulation complémentaires (13.1, 13.2) espacés l'un de l'autre et pouvant s'écarter l'un de l'autre dans la direction de marche (14), **caractérisée en ce qu'**un des éléments d'articulation complémentaires (13) est réalisé en forme d'élément annulaire fermé (13.1), **en ce que** les éléments d'articulation (13.2) de l'élément d'articulation complémentaire (13) disposés à distance l'un de l'autre sont disposés de façon à pouvoir être décalés et/ou déplacés à l'intérieur de cet élément annulaire fermé (13.1).

2. Rampe de distribution selon la revendication 1, **caractérisée en ce que** l'agencement de ressort respectif (16) produisant une force de ressort est disposé entre la partie d'extrémité respective et la partie de rampe intérieurement voisine respective (5, 6) et maintient les parties d'extrémité respectives (7, 8) de façon escamotable par rapport aux parties de rampe intérieures (5, 6), **en ce que** l'agencement de ressort (16) maintient les éléments d'articulation complémentaires espacés (13) du deuxième agencement d'articulation (13, 13.1, 13.2) en appui l'un contre l'autre appliqués l'un par rapport à l'autre.

3. Rampe de distribution selon au moins une des revendications précédentes, **caractérisée en ce que** le contour intérieur de l'élément annulaire (13.1) est réalisé en forme de coeur.

4. Rampe de distribution selon au moins une des revendications précédentes, **caractérisée en ce que** le contour intérieur de l'élément annulaire (13.1) présente, en partant des régions d'appui espacées (14) des éléments d'articulation disposés à distance l'un de l'autre (12, 13), dans la position non escamotée deux voies de guidage espacées l'une de l'autre (14), dont la distance l'une de l'autre au moins ne diminue pas.

5. Rampe de distribution selon au moins une des revendications précédentes, **caractérisée en ce que** le premier agencement d'articulation (12) se trouve en dessous du deuxième agencement d'articulation (13).

6. Rampe de distribution selon au moins une des revendications précédentes, **caractérisée en ce que** l'agencement de ressort est réalisé en forme de cylindre hydraulique (16) avec un réservoir hydraulique associé.

7. Rampe de distribution selon au moins une des revendications précédentes, **caractérisée en ce que** le deuxième agencement d'articulation (13) est réalisé selon le principe d'un axe d'articulation (13.2) et d'un coussinet d'articulation (13.1).
